# EUROPÄISCHE PATENTSCHRIFT

(11) **EP 0 546 262 B1**
(45) Veröffentlichungstag und Bekanntmachung des Hinweises auf die Patenterteilung: **01.02.1995**
(21) Anmeldenummer: 92114720.3
(22) Anmeldetag: 28.08.1992
(51) Int. Cl.: F16D 65/08, F16D 69/04, B23P 15/18

(54) **Rohbacke einer Trommelbremse**
Blank shoe for drum brake
Ebauche de mâchoire pour frein à tambour

(30) Priorität: 07.12.1991 DE 4140364
(43) Veröffentlichungstag der Anmeldung: 16.06.1993
(73) Patentinhaber: Hartmann, Hans, D-61440 Oberursel (DE); Carlesso, Domenico, I-10098 Rivoli (To) (IT)
(72) Erfinder: Hartmann, Hans, D-61440 Oberursel (DE); Carlesso, Domenico, I-10098 Rivoli (To) (IT)
(74) Vertreter: Gudel, Diether

(56) Entgegenhaltungen:
- DE-B- 1 286 351
- DE-C- 3 737 337
- GB-A- 186 422
- ATENT ABSTRACTS OF JAPAN vol. 6, no. 196 (M-161)(1074) 5. Oktober 1982 & JP-A 57 103 941

## Beschreibung

Die Erfindung betrifft eine Rohbacke einer Trommelbremse, die aus zwei miteinander vernieteten L-Profilen besteht, die jeweils einen in radialer Richtung verlaufenden Steg und ein in axialer Richtung verlaufendes Band aufweisen, wobei die beiden Stege aneinander anliegen und die beiden Bänder axial nach außen weisen und wobei eine Nut etwa mittig an der Auflagefläche für den Bremsbelag am Übergang zwischen den Stegen und den Bändern ausgebildet ist.

Eine derartige Rohbacke, die sich an und für sich bewährt hat, ist in der deutschen Patentschrift 37 37 337 beschrieben. Von diesem Stand der Technik geht die Erfindung aus.

Diese Rohbacke wird zu einer Bremsbacke dadurch komplettiert, daß ein geeignetes Reibmaterial auf die Auflagefläche der Rohbacke aufgepreßt wird. Hierzu sind Kräfte von etwa 10 Tonnen pro Rohbacke erfoderlich.

Beim Komplettieren der beschriebenen zweiteiligen Rohbacke ergab sich aber das Problem, daß, bedingt durch die hohen Drücke, das Reibmaterial in den Spalt zwischen den aneinander anliegenden Stegen der beiden L-Profile eindrang. Die Rohbacke mußte dann innen entsprechend gereinigt werden, um anschließend lackiert werden zu können. Dies ist aber nur mit einem unverhältnismäßig hohen Arbeitsaufwand möglich, der die beschriebene zweiteilige Herstellung der Rohbacke, verglichen mit früheren Techniken, wobei einteilige Rohbacken zum Einsatz kamen, wieder unattraktiv macht.

Zum Stand der Technik wird ergänzend auf die JP 57-103941 A bzw. deren Abstract (Patents Abtracts of Japan, M-161, 5. Oktober 1982, Vol. 6, No.196) verwiesen. In die Nut zwischen den beiden L-Profilen der dort beschriebenen Rohbacke ist ein Elastomer eingelegt, das die Schwingungen dämpfen soll, also einem ganz anderen Zweck dient.

Das Elastomer kann auch das der vorliegenden Erfindung zugrunde liegende Problem, nämlich das Eindringen von Reibmaterial in den Spalt zwischen den L-Profilen beim Preßvorgang zu verhindern, nicht lösen: Das Elastomer wird nämlich bei den Betriebstemperaturen einer mit einer derartigen Rohbacke ausgerüsteten Trommelbremse (ca. 600° C) weich und kann dann die Dichtfunktion nicht mehr erfüllen.

Außerdem ist die dort beschriebene Lösung nicht praktikabel: Durch ein ungleiches Abfahren der Bremsbelagoberfläche kommt es aufgrund der auf die Bänder ausgeübten Bremskräfte nach einer gewissen Betriebszeit zu einem Auseinandersprengen der aneinander liegenden Stege, so daß die gesamte Bremse nicht mehr funktioniert. Auch die - eventuell vorhandenen - klebenden Eigenschaften des Elastomers können dies nicht verhindern, da es keinen Kleber gibt, der bis 600° C temperaturbeständig ist.

Schließlich besteht die Gefahr, daß das Elastomer das Reibmaterial auflöst, so daß sich das Reibmaterial im Betrieb ablöst und die Bremse ebenfalls nicht mehr funktioniert.

Hier setzt die Erfindung ein, der die Aufgabe zugrundeliegt, eine Rohbacke einer Trommelbremse mit den eingangs genannten Merkmalen bei Beibehaltung ihrer Vorteile so auszugestalten, daß beim anschließenden Preßvorgang das Reibmaterial nicht mehr in den Spalt zwischen den aneinander anliegenden Stegen der beiden L-Profile eindringen kann.

In überraschender Weise ergab sich die Lösung dieser Aufgabe in der einfachen Maßnahme, in den Nut einen Draht einzulegen und den Draht dort zu befestigen.

Der Draht wirkt überraschenderweise gewissermaßen als Sperre für das Reibmaterial beim Preßvorgang, obschon naturgemäß rechts und links neben dem Draht zwei kleinere Spalte ausgebildet werden, durch die theoretisch das Reibmaterial beim Preßvorgang hätte fließen können. Versuche haben aber gezeigt, daß dies entgegen aller Erwartung nicht der Fall ist, so daß mit der Erfindung eine einfache Lösung für das geschilderte Problem vorgeschlagen wird. Man muß also lediglich den Draht in die Nut einlegen und geeignet fixieren und anschließend kann die Rohbacke durch Aufpressen des Reibmaterials komplettiert werden.

Für die Befestigung des Drahts der Rohbacke gibt es viele Möglichkeiten, beispielsweise kann der Draht dort eingeklebt werden oder er hält aufgrund seiner Eigenspannung. Eine konstruktiv ebenfalls sehr einfache Lösung ist dadurch gekennzeichnet, daß die Enden des Drahts abgebogen und in entsprechende Aufnahmen der Rohbacke eingesteckt sind.

Der Draht besteht aus geeignetem Metall oder Kunststoffmaterial. Bevorzugt wird es, wenn der Draht aus demselben Material besteht wie das Material der Rohbacke, d.h. aus Stahl. Dann treten beim Erwärmen der Trommelbremse keine Probleme auf, die ansonsten bedingt sein könnten durch die unterschiedlichen thermischen Ausdehnungskoeffizienten der verwendeten Materialien.

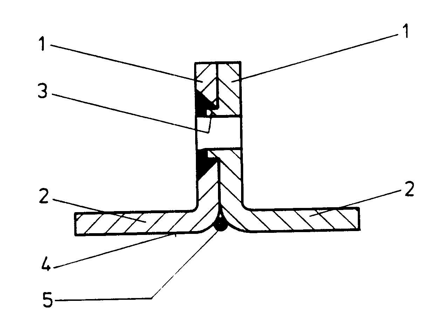

Die Erfindung wird im folgenden anhand eines Ausführungsbeispiels näher erläutert, aus dem sich weitere wichtige Merkmale ergeben. Die Figur zeigt einen Schnitt durch eine erfindungsgemäße Rohbacke.

Bezüglich der Einzelheiten der genauen Konstruktion der erfindungsgemäßen Rohbacke mitsamt ihrer Herstellung wird verwiesen auf die eingangs schon erwähnte deutsche Patentschrift 37 37 337. Zusammenfassend ist insoweit festzustellen, daß die Rohbacke aus zwei L-Profilen besteht, die zeichnerisch dargestellt sind. Jedes L-Profil hat einen in radialer Richtung verlaufenden Steg 1 und ein in axialer Richtung verlaufendes Band 2. Die beiden L-Profile sind miteinander vernietet und die Figur zeigt einen der hierfür verwendeten, rohrförmigen Niete 3, der einstückig mit dem einen der L-Profile ist und der in ein entsprechendes Loch am anderen L-Profil eingreift.

Aus fertigungstechnischen Gründen können nun die Übergänge zwischen den Stegen 1 und den Bändern 2 nicht scharfkantig sein. Vielmehr sind sie in einem bestimmten Radius ausgebildet, wie zeichnerisch dargestellt. Dadurch wird eine Nut etwa mittig an der Auflagefläche 4 für den Bremsbelag ausgebildet.

Erfindungsgemäß ist in die Nut ein Draht 5 eingelegt und dort geeignet befestigt. Es ist auch möglich, daß die Befestigung durch den Druck beim Aufpressen des Reibbelags (Bremsbelag) hergestellt wird.

Für den Draht 5 kann man Rundmaterial verwenden, wie dies handelsüblich ist. D.h., daß das Profil des Drahts nicht an das Profil der Nut angepaßt werden muß, obgleich dies auch möglich ist.

Der Durchmesser des Drahts soll so gewählt sein, daß der Draht die Nut im wesentlichen ausfüllt, d.h. daß die Außenseite des Drahts nicht oder nicht wesentlich über die Auflagefläche 4 vorsteht.

Der Draht bewirkt, daß beim preßvorgang kein Reibmaterial mehr in den Spalt zwischen den Stegen 1,1 eindringen kann. Der Abstand zwischen den Stegen wird durch das beim Stand der Technik eindringende Reibmaterial also auch nicht mehr vergrößert. Man erspart sich auch aufwendige Reinigungsarbeiten an der Innenseite der Rohbacke. Die erfindungsgemäße Rohbacke kann außerdem recycelt werden. Die Reste des Reibmaterials müssen hierzu abgetragen werden und es hat sich herausgestellt, daß dabei der Draht in der Nut verbleibt, so daß die Rohbacke mitsamt dem Draht wieder neu beschichtet werden kann.

## Patentansprüche

1. Rohbacke einer Trommelbremse, die aus zwei miteinander vernieteten L-Profilen besteht, die jeweils einen in radialer Richtung verlaufenden Steg (1) und ein in axialer Richtung verlaufendes Band (2) aufweisen, wobei die beiden Stege (1,1) aneinander anliegen und die beiden Bänder (2,2) axial nach außen weisen und wobei eine Nut etwa mittig an der Auflagefläche (4) für den Bremsbelag am Übergang zwischen den Stegen (1,1) und den Bändern (2,2) ausgebildet ist,
**dadurch gekennzeichnet**,
daß in die Nut ein Draht (5) eingelegt und dort befestigt ist.

2. Rohbacke nach Anspruch 1,
**dadurch gekennzeichnet**,
daß der Draht (5) aus Stahl besteht.

3. Rohbacke nach Anspruch 1 oder 2,
**dadurch gekennzeichnet**,
daß die Enden des Drahts (5) abgebogen und in entsprechende Aufnahmen der Rohbacke eingesteckt sind.

4. Rohbacke nach einem der Ansprüche 1 bis 3,
**dadurch gekennzeichnet**,
daß die L-Profile aus warm gewalztem Bandstahl bestehen.

5. Rohbacke nach einem der Ansprüche 1 bis 4,
**dadurch gekennzeichnet**,
daß an das eine L-Profil mehrere, voneinander beabstandete, rohrförmige Niete (3) angeformt sind, die in Durchgangslöcher des Stegs (1) des anderen L-Profils eingreifen.

6. Rohbacke nach Anspruch 5,
**dadurch gekennzeichnet**,
daß die Durchgangslöcher an ihrer Außenseite konisch erweitert sind.

## Claims

1. An unfinished shoe for a drum brake, comprising two L-shaped profiles riveted together, each profile having a bar (1) extending in the radial direction and a strip (2) extending in the axial direction, the two bars (1, 1) resting against one another and the two strips (2, 2) pointing axially outwards, a groove being formed substantially centrally on the supporting surface (4) for the brake lining, at the point of transition from the bars (1, 1) to the strips (2, 2), **characterised in that** a wire (5) is inserted into the groove and is secured therein.

2. An unfinished shoe in accordance with claim 1, **characterised in that** the wire (5) is made of steel.

3. An unfinished shoe in accordance with claim 1 or 2, **characterised in that** the ends of the wire (5) are bent and are inserted in corresponding receiving means in the unfinished shoe.

4. An unfinished shoe in accordance with one of claims 1 to 3, **characterised in that** the L-shaped profiles are made of hot-rolled steel strips.

5. An unfinished shoe in accordance with one of claims 1 to 4, **characterised in that** a plurality of spaced tubular rivets (3) are moulded on to one L-shaped profile and engage in through holes in the bar (1) of the other L-shaped profile.

6. An unfinished shoe in accordance with claim 5, **characterised in that** the through holes are conically broadened at their outer side.

## Revendications

1. Ebauche de mâchoire pour un frein à tambour, qui est constituée par deux profilés en L fixés l'un à l'autre par rivetage et comportant chacun une barrette (1) qui s'étend en direction radiale et une bande (2) qui s'etend en direction axiale, les deux barrettes (1,1) s'appliquant l'une contre l'autre, tandis que les deux bandes (2,2) sont dirigées axialement vers l'extérieur, une rainure étant formée approximativement au centre de la surface d'application (4) pour la garniture de frein, au niveau de la jonction entre les barrettes (1,1) et les bandes (2,2),
caractérisée en ce qu'un fil (5) est inséré dans la rainure et y est fixé.

2. Ebauche de mâchoire selon la revendication 1, caractérisée en ce que le fil (5) est réalisé en acier.

3. Ebauche de mâchoire selon la revendication 1 ou 2, caractérisée en ce que les extrémités du fil (5) sont repliées et sont enfichées dans des logements correspondants de l'ébauche de mâchoire.

4. Ebauche de mâchoire selon l'une des revendications 1 à 3, caractérisée en ce que les profilés en L sont constitués par un feuillard d'acier laminé à chaud.

5. Ebauche de mâchoire selon l'une des revendications 1 à 4, caractérisée en ce que sur un profilé en L sont formés plusieurs rivets tubulaires (3), qui sont distants les uns des autres et s'engagent dans des trous traversants de la barrette (1) de l'autre profilé en L.

6. Ebauche de mâchoire selon la revendication 5, caractérisée en ce que les trous traversants s'élargissent avec une forme conique, au niveau de leur côté extérieur.
